(19) Europäisches Patentamt
European Patent Office
Office européen des brevets

(11) **EP 4 105 104 A1**

(12) **EUROPÄISCHE PATENTANMELDUNG**

(43) Veröffentlichungstag:
**21.12.2022 Patentblatt 2022/51**

(21) Anmeldenummer: **21180390.3**

(22) Anmeldetag: **18.06.2021**

(51) Internationale Patentklassifikation (IPC):
**B61L 27/00** *(2022.01)* **G06F 1/12** *(2006.01)*
**H04L 7/00** *(2006.01)*

(52) Gemeinsame Patentklassifikation (CPC):
**G06F 1/14; B61L 27/53; B61L 27/70; H04J 3/0667**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Mobility GmbH**
**81739 München (DE)**

(72) Erfinder:
• **de Stefano, Ernesto**
  **38126 Braunschweig (DE)**
• **Fortunati, Daniel**
  **38102 Braunschweig (DE)**
• **Nayak, Bhabani**
  **80797 München (DE)**

(54) **EINRICHTUNG UND VERFAHREN ZUM RECHNERGESTÜTZTEN ÜBERWACHEN ZWEIER ZEITBASEN VON ZWEI KOMMUNIKATIONSEINRICHTUNGEN**

(57) Gegenstand der Erfindung ist ein Verfahren (zusätzlich eine Einrichtung und ein Computerprogramm) zum rechnergestützten Überwachen einer ersten Zeitbasis einer ersten Kommunikationseinrichtung und einer zweiten Zeitbasis einer zweiten Kommunikationseinrichtung. In einem ersten Ablauf wird in Messschritten (n) der Christian Algorithmus zur Berechnung von Zeitversatzintervallen eines Zeitversatzes zwischen den Zeitbasen angewandt. In einem zweiten Ablauf wird mehrfach für zwei Messschritte (n, n+x) eine maximal mögliche Drift ($\Omega_o$) des Zeitversatzes unter Berücksichtigung der unteren Schranke des Zeitversatzintervalls für den früheren Messschritt und der oberen Schranke des Zeitversatzintervalls für den späteren Messschritt ermittelt und eine minimal mögliche Drift ($\Omega_u$) unter Berücksichtigung der oberen Schranke des Zeitversatzintervalls für den früheren Messschritt und der unteren Schranke des Zeitversatzintervalls für den späteren Messschritt ermittelt. Unter Berücksichtigung der maximal möglichen Drift wird eine obere Schranke und unter Berücksichtigung der minimal möglichen Drift eine untere Schranke eines Driftintervalls (CDW) berechnet. In einem dritten Ablauf wird von mehreren Driftintervallen (CDW) die niedrigste obere Schranke als obere Schranke eines resultierendes Driftintervalls (RCDW) für die relative Drift festgesetzt und die höchste untere Schranke als untere Schranke des resultierenden Driftintervalls (RCDW) mit vorteilhaft engen Schranken für die relative Drift festgesetzt wird.

FIG 7

EP 4 105 104 A1

**Beschreibung**

Die Erfindung betrifft ein Verfahren zum rechnergestützten Überwachen einer ersten Zeitbasis einer ersten Kommunikationseinrichtung und einer zweiten Zeitbasis einer zweiten Kommunikationseinrichtung. Außerdem betrifft die Erfindung eine Anlage mit einer ersten Kommunikationseinrichtung, aufweisend eine erste Zeitbasis mit einer zweiten Kommunikationseinrichtung, aufweisend eine zweite Zeitbasis und mit einer Schnittstelle zum Aufbau einer Kommunikationsverbindung zwischen der ersten Kommunikationseinrichtung und der zweiten Kommunikationseinrichtung. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Bekanntermaßen kann es zu einem Zeitversatz zwischen einer ersten Zeitbasis einer ersten Kommunikationseinrichtung und einer zweiten Zeitbasis einer zweiten Kommunikationseinrichtung kommen.

Ein grundlegendes Verfahren zur Synchronisation von Zeitbasen ist beispielsweise aus der Druckschrift "Probabilistic clock synchronization" (Flaviu, Christian, Distributed Computing (1989) 3:146-158) bekannt. Das dort beschriebene Verfahren soll im Folgenden als Christian Algorithmus bezeichnet werden und kann im Wesentlichen durch die eingangs angegebenen Verfahrensschritte in einem ersten Ablauf des Verfahrens beschrieben werden, wobei bei jedem Messschritt jeweils

- zu einem ersten Zeitpunkt, der auf die erste Zeitbasis bezogen ist, eine erste Nachricht von der ersten Kommunikationseinrichtung zu der zweiten Kommunikationseinrichtung gesendet wird,
- zu einem zweiten Zeitpunkt, der auf die zweite Zeitbasis bezogen ist, die erste Nachricht von der zweiten Kommunikationseinrichtung empfangen wird,
- zu einem dritten Zeitpunkt, der auf die zweite Zeitbasis bezogen ist, eine zweite Nachricht von der zweiten Kommunikationseinrichtung zu der ersten Kommunikationseinrichtung gesendet wird, und
- zu einem vierten Zeitpunkt, der auf die erste Zeitbasis bezogen ist, die zweite Nachricht von der ersten Kommunikationseinrichtung empfangen wird,
- ein Zeitversatzintervall, in dem ein Zeitversatz zwischen der ersten Zeitbasis und der zweiten Zeitbasis liegen kann, aus dem ersten Zeitpunkt, dem zweiten Zeitpunkt, dem dritten Zeitpunkt und dem vierten Zeitpunkt bestimmt wird.

Ein Verfahren, welches den Christian Algorithmus zur Einschätzung eines Zeitversatzes zwischen zwei Zeitbasen nutzt, ist in der WO 2019/223951 A1 beschrieben. Mit Hilfe des Christian Algorithmus werden mehrere Zeitversatzintervalle bestimmt wobei mithilfe einer Extrapolation zeitlich aufeinanderfolgender Zeitversatzintervalle unter Berücksichtigung einer angenommenen Drift des Zeitversatzes Hilfsfenster für einen möglichen Zeitversatz gebildet werden können. Durch eine Schnittmengenbildung hinsichtlich mehrerer Hilfsfenster kann ein resultierendes Zeitversatzintervall ermittelt werden, welches im Vergleich zu den Zeitversatzintervallen der vorausgegangenen Messungen einen kleineren Fehler aufweist.

Dies wird erreicht, indem in einem zweiten Ablauf des Verfahrens mehrfach für einen früheren Messschritt und einen späteren Messschritt

- eine maximal mögliche Drift in der Zeit zwischen dem früheren Messschritt und dem späteren Messschritt unter Berücksichtigung der unteren Schranke des Zeitversatzintervalls für den früheren Messschritt und der oberen Schranke des Zeitversatzintervalls für den späteren Messschritt ermittelt wird,
- eine minimal mögliche Drift in der Zeit zwischen dem früheren Messschritt und dem späteren Messschritt unter Berücksichtigung der oberen Schranke des Zeitversatzintervalls für den früheren Messschritt und der unteren Schranke des Zeitversatzintervalls für den späteren Messschritt ermittelt wird,
- unter Berücksichtigung der maximal möglichen Drift eine obere Schranke und unter Berücksichtigung der minimal möglichen Drift eine untere Schranke eines Driftintervalls, in der eine die zeitliche Änderung des Zeitversatzes beschreibende relative Drift liegen kann, berechnet wird,

Der Erfindung liegt die Aufgabe zugrunde, ein Verfahren zum rechnergestützten Überwachen einer ersten Zeitbasis einer ersten Kommunikationseinrichtung und einer zweiten Zeitbasis einer zweiten Kommunikationseinrichtung, anzugeben, mit dem ein Zeitversatz zwischen den Zeitbasen bzw. eine Drift des Zeitversatzes in möglichst kurzer Zeit möglichst genau bestimmt werden kann, um unter Nutzung des Ergebnisses die beiden Kommunikationseinrichtungen zu überwachen. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass in einem dritten Ablauf von mehreren Driftintervallen die niedrigste obere Schranke als obere

Schranke eines resulierendes Driftintervalls für die relative Drift festgesetzt wird und die höchste untere Schranke als untere Schranke des resultierenden Driftintervalls für die relative Drift festgesetzt wird.

Als erster Ablauf, zweiter Ablauf und dritter Ablauf des erfindungsgemäßen Verfahrens sollen jeweils Abfolgen von Verfahrensschritten verstanden werden, die zur Erreichung der nachfolgend näher beschriebenen Bestimmungsergebnisse oder Berechnungsergebnisse rechnergestützt durchgeführt werden. Dabei werden die Ergebnisse des ersten Ablaufes im zweiten Ablauf und die Ergebnisse des zweiten Ablaufs im dritten Ablauf benötigt. Dies bedeutet jedoch nicht, dass die Abläufe nacheinander durchgeführt werden müssen. Diese können auch parallel durchgeführt werden, wenn jeder Ablauf für sich wiederholt wird, wobei dann für den gerade durchgeführten zweiten Ablauf die Ergebnisse eines vorher abgeschlossenen ersten Ablaufes und für den gerade durchgeführten dritten Ablauf die Ergebnisse eines vorher abgeschlossenen zweiten Ablaufes verwendet werden.

Bei dem ersten Ablauf handelt es sich um eine Durchführung des eingangs beschriebenen Christian Algorithmus. Nach Bestimmung der genannten vier Zeitpunkte wird gemäß dem Christian Algorithmus das Zeitversatzintervall $\Delta(n)$, welches das Intervall für einen möglichen Zeitversatz angibt, innerhalb dessen der Zeitversatz, also der absolute Zeitunterschied zwischen der ersten Zeitbasis und der zweiten Zeitbasis aufgrund der gemessenen Zeitpunkte überhaupt nur liegen kann, bestimmt.

Bei dem Christian Algorithmus wird derart vorgegangen, dass der Zeitversatz $\Delta(n)$ aus dem ersten Zeitpunkt, dem zweiten Zeitpunkt, dem dritten Zeitpunkt und dem vierten Zeitpunkt berechnet wird. Ein maximal möglicher Fehler für den Zeitversatz $e(n)$ kann aus dem ersten Zeitpunkt, dem zweiten Zeitpunkt, dem dritten Zeitpunkt und dem vierten Zeitpunkt berechnet werden und unter Berücksichtigung des maximal möglichen Fehlers eine obere Schranke und eine untere Schranke des Zeitversatzintervalls berechnet werden (hierzu im Folgenden noch mehr).

Der erste Ablauf enthält mindestens drei Messschritte. Dies kann damit begründet werden, dass der erste Ablauf eine Grundlage für die Durchführung des zweiten Ablaufes bilden muss. In diesem müssen mehrfach je zwei Messschritte betrachtet werden, nämlich ein früherer Messschritt n und ein späterer Messschritt n+x. Dabei gibt n die Nummer des Messschrittes an und ist eine natürliche Zahl. Ein späterer Messschritt weist zu dem früheren Messschritt einen Abstand x auf, wobei es sich hierbei auch um eine natürliche Zahl handelt. Für einen benachbarten späteren Messschritt wäre somit x = 1. Werden also minimal drei Messschritte im ersten Ablauf durchgeführt, so können im zweiten Ablauf maximal drei Vergleiche durchgeführt werden: nämlich der Vergleich der Messschritte 1 und 2, der Messschritte 2 und 3 und der Messschritte 1 und 3. Bei n > 3 erhöhen sich die möglichen Kombinationen.

Sind die Zeitversatzintervalle von einem früheren Messschritt und einem späteren Messschritt bekannt, so kann das hierdurch entstehende Zeitversatzintervall beider Messungen verwendet werden, um eine maximal mögliche Änderung des Zeitversatzes (auch Drift genannt) sowie eine minimal mögliche Änderung des Zeitversatzes unter Berücksichtigung der durch das Zeitversatzintervall bestimmten Messunsicherheit zu ermitteln. Eine maximal mögliche Drift ergibt sich, wenn der Zeitversatz im früheren Messschritt minimal und der Zeitversatz im späteren Messschritt maximal innerhalb des jeweiligen Zeitversatzintervalls angenommen wird. Deswegen wird die untere Schranke des Zeitversatzintervalls für den früheren Messschritt und die obere Schranke des Zeitversatzintervalls für den späteren Messschritt berücksichtigt. Umgekehrt ergibt sich eine minimal mögliche Drift, wenn der Zeitversatz im früheren Messschritt maximal und der Zeitversatz im späteren Messschritt minimal angenommen wird. Deswegen wird in diesem Fall die obere Schranke des Zeitversatzintervalls des früheren Messschrittes und die obere Schranke des Zeitversatzintervalls des späteren Messschrittes berücksichtigt.

Anders, als gemäß dem Stand der Technik, wird allerdings die aus zwei Messschritten ermittelte Drift nicht dazu verwendet, um ein Hilfsfenster durch Extrapolation zu ermitteln. Vielmehr werden mehrere, vorzugsweise mindestens drei Driftintervalle in der oben angegebenen Weise bestimmt und kombinieren Hieraus lässt sich ein resulierendes Driftintervall ermitteln, welches sich vorteilhaft sehr viel genauer eingrenzen lässt und außerdem durch Messungen (Messschritte) in einem vergleichsweise kurzen Zeitraum bereits vergleichsweise zuverlässige Aussagen über die vorliegende Drift ermöglicht, da nicht systematisch Fehler wie zum Beispiel übertragungsbedingte Laufzeitunterschiede der ersten Nachricht und der zweiten Nachricht bestmöglich eliminiert werden. Dies wird insbesondere erreicht, wenn im zweiten Ablauf jedes im ersten Ablauf ermittelte Zeitversatzintervall mit jedem andern im ersten Ablauf ermittelten Zeitversatzintervall zur Ermittlung eines zugehörigen Driftintervalls kombiniert wird.

Daher kann mit dem erfindungsgemäßen Verfahren in einem vergleichsweise kurzen Zeitraum ein vergleichsweise genaues Ergebnis für die Drift ermittelt werden. Oder aus der Drift kann unter Berücksichtigung des Zeitraumes ein vergleichsweise genauer relativer Zeitversatz zwischen der ersten Zeitbasis und der zweiten Zeitbasis berechnet werden. Dies ermöglicht vorteilhaft auch den Betrieb von sicherheitsrelevanten Kommunikationseinrichtungen, deren synchrone Kommunikation für das betreffende Verfahren Voraussetzung ist, mit COTS (commercial of the shelf) Komponenten als Zeitbasis. Als Beispiel für eine Anwendung kann die Kommunikationstechnik im Bahnbetrieb genannt werden, die einem hohen Sicherheitsstandard genügen muss.

In dem dritten Auflauf werden erfindungsgemäß von den mehreren ermittelten Intervallen des zweiten Ablaufes die niedrigste obere Schranke als obere Schranke des resultierenden Driftintervalls festgesetzt und die höchste untere Schranke als untere Schranke des resultierenden Driftintervalls für die Drift festgesetzt. Dahinter verbirgt sich die für die Erfindung wichtige Erkenntnis, dass jedes der einzelnen Driftintervalle mit derselben Sicherheit hinsichtlich des Auftretens von Fehlern ermittelt wurde. Da die Voraussetzungen der einzelnen Messungen aber unterschiedlich hohe Fehler enthalten können, die von den jeweils geltenden Bedingungen der Übertragung abhängen, können die unterschiedlich hohen und nicht bekannten Fehler eingegrenzt werden, indem jeweils die niedrigste obere Schranke sowie die höchste untere Schranke der zur Verfügung stehenden Intervalle für das resultierende Intervall berücksichtigt werden.

Ziel des Verfahrens kann beispielsweise die Überwachung einer Synchronisierung der beiden Zeitbasen sein. Hierbei geht es um die Bestimmung eines relativen Zeitversatz zwischen der ersten Zeitbasis und der zweiten Zeitbasis. Die Überwachung kann auch durch Bestimmung der Drift erfolgen. Wird bei der Überwachung festgestellt, dass die Synchronisierung aufgrund eines wachsenden Zeitversatzes oder einer fortschreitenden Drift nicht mehr durchgeführt werden kann, müssen entsprechende Gegenmaßnahmen eingeleitet werden (hierzu im Folgenden noch mehr). Die Gegenmaßnahmen können beispielsweise aus einer Fehlermeldung oder auch einer Korrektur, d. h. Verkleinerung des Zeitversatzes bestehen.

Unter "rechnergestützt" oder "computerimplementiert" kann im Zusammenhang mit der Erfindung eine Implementierung des Verfahrens verstanden werden, bei dem mindestens ein Computer mindestens einen Verfahrensschritt des Verfahrens ausführt.

Der Ausdruck "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise ein Wandler, ein Sensor zur Erzeugung von Messsignalen oder eine elektronische Schaltung verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, oder softwaretechnisch, beispielweise als Interaktion zwischen einzelnen Programmmodulen eines oder mehrerer Computerprogramme, realisiert sein.

Als "Programmmodule" sollen einzelne Funktionsabläufe verstanden werden, die einen erfindungsgemäßen Programmablauf von rechnergestützten Verfahrensschritten ermöglichen. Diese Funktionsabläufe können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Sofern es in der nachfolgenden Beschreibung nicht anders angegeben ist, beziehen sich die Begriffe "erstellen", "feststellen", "bestimmen", "berechnen", "generieren", "konfigurieren", "modifizieren" und dergleichen vorzugsweise auf Prozesse, die Daten erzeugen, verändern oder die Daten in andere Daten überführen. Dabei liegen die Daten insbesondere als physikalische Größen vor, beispielsweise als elektrische Impulse oder auch als Messwerte. Die erforderlichen Anweisungen sind als Programmbefehle in einem Computerprogramm als Software zusammengefasst. Weiterhin beziehen sich die Begriffe "senden", "empfangen", "einlesen", "auslesen", "übertragen", "übergeben" und dergleichen auf das Zusammenspiel einzelner Hardwarekomponenten und/oder Softwarekomponenten über Schnittstellen.

Gemäß einer Ausgestaltung der Erfindung ist vorgesehen, dass der Zeitversatz bei einem Messschritt n auf Grundlage der Sendezeit der ersten Nachricht als Zeitdifferenz zwischen dem ersten Zeitpunkt und dem zweiten Zeitpunkt und der Sendezeit der zweiten Nachricht als Zeitdifferenz zwischen dem dritten Zeitpunkt und dem vierten Zeitpunkt berechnet wird.

Insbesondere kann die Differenz der beiden genannten Zeitdifferenzen zur Beurteilung eines potentiellen Zeitversatz der beiden Zeitbasen verwendet werden. Dahinter steht die Überlegung, dass ein Zeitversatz zu einer Verschiebung der gemessenen Zeiten im Vergleich zu den realen Zeiten führt. Damit wird die gemessene Sendezeit der einen Nachricht kürzer und der anderen Nachricht länger, wobei es sich bei den Nachrichten um die erste Nachricht und die zweite Nachricht im ersten Ablauf des Verfahrens handelt. Insofern wirkt sich der Zeitversatz doppelt auf die gemessenen Sendezeiten aus.

Es kann beispielsweise vorgesehen werden, dass der Zeitversatz $\Delta(n)$ bei einem Messschritt n berechnet wird nach der Formel:

$$\Delta(n) = ((T2(n)-T1(n))-(T4(n)-T3(n))) / 2 \qquad (1)$$

Dass das Ergebnis (im Nenner) durch zwei geteilt wird, trägt dem Umstand Rechnung, dass sich, wie bereits erwähnt, der Zeitversatz doppelt auf die gemessenen Sendezeiten auswirkt. Allerdings ist es nicht erforderlich, das Ergebnis durch zwei zu teilen, wenn dies im weiteren Verlauf des Verfahrens berücksichtigt wird (hierzu im Folgenden noch mehr).

Gemäß einer Ausgestaltung der Erfindung ist vorgesehen, dass ein maximal möglicher Fehler für den Zeitversatz bei einem Messschritt n unter Berücksichtigung einer in der ersten Kommunikationseinrichtung gemessenen Nachrichtenlaufzeit als Zeitdifferenz zwischen dem ersten Zeitpunkt und dem vierten Zeitpunkt und einer in der zweiten Kommunikationseinrichtung gemessenen Reaktionszeit als Zeitdifferenz zwischen dem zweiten Zeitpunkt und dem dritten Zeitpunkt berechnet wird.

Bei der gemessenen Nachrichtenlaufzeit handelt es sich nicht um die tatsächliche Nachrichtenlaufzeit. Dies kann damit begründet werden, dass die Messung mit Messfehlern behaftet ist. Der größte Messfehler liegt darin, dass die Zeitdifferenz zwischen dem ersten Zeitpunkt und dem vierten Zeitpunkt nicht berücksichtigt, dass in der zweiten Kommunikationseinrichtung eine Reaktionszeit vom Empfangen der ersten Nachricht bis zum Versenden der zweiten Nachricht vorliegt.

Der letztgenannte Messfehler lässt sich jedoch leicht ermitteln. Er besteht in der gemessenen Reaktionszeit, die als Zeitdifferenz zwischen dem zweiten Zeitpunkt und dem dritten Zeitpunkt berechnet werden kann und deswegen die gemessene Nachrichtenlaufzeit um die gemessene Reaktionszeit verringert. Wird daher die gemessene Reaktionszeit von der gemessenen Nachrichtenlaufzeit abgezogen, wird das Ergebnis eine bessere Nehrung an die tatsächliche Nachrichtenlaufzeit darstellen.

Gleichzeitig bildet das Ergebnis ein Maß für den maximal möglichen Fehler, wenn man die Überlegung zugrunde legt, dass die Signallaufzeiten aufgrund von Unregelmäßigkeiten in der Übertragungsstrecke schwanken können. Diese Schwankungen sind groß im Vergleich zur Messgenauigkeit bei der Ermittlung der betreffenden zu messenden Zeitpunkte. Deswegen kann ein Messfehler auf Grund von Schwankungen bei der Übertragung, die unter Berücksichtigung der Reaktionszeit der zweiten Kommunikationseinrichtung bestimmt werden, hinreichend genau abgeschätzt werden.

Es kann beispielsweise vorgesehen werde, dass der maximal mögliche Fehler e(n) Des betreffenden Messschrittes n berechnet wird nach der Formel:

$$e(n) = ((T4(n) - T1(n)) - (T3(n) - T2(n))) \ / \ 2 \qquad (2)$$

Die Zeitdifferenz zwischen dem vierten Zeitpunkt und dem ersten Zeitpunkt gibt die gemessene Signallaufzeit an. Von dieser abgezogen werden kann die Reaktionszeit der zweiten Kommunikationseinrichtung, ermittelt durch die Zeitdifferenz zwischen dem dritten Zeitpunkt und dem zweiten Zeitpunkt. Da es sich um zwei Übertragungen handelt, kann das Ergebnis (Nenner) durch zwei geteilt werden, um den maximal möglichen Fehler pro Übertragung zu bekommen.

Alternativ kann ein Teilen durch zwei unterbleiben, wenn dies im weiteren Verfahren bei der Berechnung berücksichtigt wird. Der maximal mögliche Fehler kann somit auch allein mit dem oben genannten Nenner berechnet werden.

Mit anderen Worten kann festgestellt werden, dass der tatsächliche Zeitversatz δ(n) eine Messschrittes n zuverlässig in folgendem Intervall liegt.

$$\Delta u(n) = \Delta(n) - e(n) \leq \delta(n) \leq \Delta(n) + e(n) = \Delta o(n) \qquad (3)$$

wobei

$\Delta u(n)$ die untere Schranke des Zeitversatzintervalls des Messschrittes,
$\Delta o(n)$ die obere Schranke des Zeitversatzintervalls des Messschrittes

ist.

Werden die Formeln (1) und (2) in die Formel (3) eingesetzt, so erhält man die obere Schranke und die untere Schranke des Zeitversatzintervalls für den tatsächlichen Zeitversatz δ(n):

$$\Delta u(n) = T3(n) - T4(n) \leq \delta(n) \leq T2(n) - T1(n) = \Delta o(n) \qquad (4)$$

Gemäß einer Ausgestaltung der Erfindung ist vorgesehen, dass die untere Schranke des Zeitversatzintervalls $\Delta u(n)$ des Messschrittes n berechnet wird nach der Formel:

$$\Delta \mathrm{u}(n) = T3(n) - T4(n)$$

und die obere Schranke des Zeitversatzintervalls $\Delta o(n)$ des Messschrittes (n) berechnet wird nach der Formel:

$$\Delta \mathrm{o}(n) = T2(n) - T1(n).$$

Wie oben bereits erläutert, werden bei diesen Formeln, die Teile der Formel (4) darstellen, sowohl die Messungen für den Zeitversatz $\Delta(n)$ als auch die Abschätzung des Fehlers $e(n)$ berücksichtigt.

Gemäß einer Ausgestaltung der Erfindung ist vorgesehen, dass eine Zeitdifferenz zwischen dem früheren Messschritt und dem späteren Messschritt n+x berechnet wird, wobei zur Ermittlung der Zeitdifferenz die gemessenen ersten Zeitpunkte oder die gemessenen zweiten Zeitpunkte oder die gemessenen dritten Zeitpunkte oder die gemessenen vierten Zeitpunkte des früheren Messschrittes und des späteren Messschrittes berücksichtigt werden.

Die Zeitdifferenz gibt ein Maß für den Zeitraum an, welcher zwischen dem früheren Messschritt und dem späteren Messschritt liegt. Diese Zeitdifferenz ist zur Ermittlung der Drift auf der Grundlage der ermittelten Zeitversätze erforderlich, da die Drift definiert ist als die zeitliche Änderung des Zeitversatzes. Dabei ist es vorteilhaft, Zeitpunkte zu verwenden, die im Rahmen der Ermittlung der Messergebnisse der Messschritte ohnehin zur Verfügung stehen. Dabei werden jeweils vergleichbare Zeitpunkte herangezogen, also beispielsweise der vierte Zeitpunkt des früheren Messschrittes und der vierte Zeitpunkt des späteren Messschrittes (Analoges gilt für die ersten, zweiten und dritten Zeitpunkte).

Einschub

Gemäß einer Ausgestaltung der Erfindung ist vorgesehen, dass die obere Schranke $\Omega o(n, n+x)$ des Driftintervalls berechnet wird nach der Formel:

$$\Omega \mathrm{o}(n, n+x) = (\Delta \mathrm{o}(n+x) - \Delta \mathrm{u}(n)) / (T4(n+x) - T4(n))$$

und die untere Schranke $\Omega u(n, n+x)$ des Driftintervalls berechnet wird nach der Formel:

$$\Omega \mathrm{u}(n, n+x) = (\Delta \mathrm{u}(n+x) - \Delta \mathrm{o}(n)) / (T4(n+x) - T4(n))$$

*wobei*

*n der frühere Messschritt,*
*n+1 der spätere Messschritt,*
$\Delta u(n)$ die untere Schranke des Zeitversatzintervalls des früheren Messschrittes,
$\Delta u(n+x)$ die untere Schranke des Zeitversatzintervalls des späteren Messschrittes,
$\Delta o(n)$ die obere Schranke des Zeitversatzintervalls des früheren Messschrittes,
$\Delta o(n+x)$ die obere Schranke des Zeitversatzintervalls des späteren Messschrittes,
T4 (n) der vierte Zeitpunkt des früheren Messschrittes,
T4(n+x) der vierte Zeitpunkt des späteren Messschrittes

Ist.

Der Ausdruck *(T4(n+x)-T4(n))* gibt dabei eine Zeitdifferenz zwischen dem früheren Messschritt (n) und dem späteren Messschritt (n+x), wobei zur Ermittlung der Zeitdifferenz alternativ auch die gemessenen ersten Zeitpunkte, die gemessenen zweiten Zeitpunkte oder die gemessenen dritten Zeitpunkte des früheren Messschrittes und des späteren Messschrittes verwendet werden können, wie oben bereit beschrieben.

Die oben genannten Berechnungsformeln geben vorteilhaft einen Algorithmus an, mit dem rechnergestützt bei Einhaltung kurzer Rechenzeichen die Intervalle aus jeweils einem früheren Messschritt und einem späteren Messschritt berechnet werden können.

Gemäß einer Ausgestaltung der Erfindung ist vorgesehen, dass ein resultierender Driftwert $\Omega r$ bestimmt wird als Mittelwert der oberen Schranke des resultierenden Driftintervalls und der unteren Schranke des resultierenden Driftintervalls.

Der Bestimmung des resultierenden Wertes auf diesem Weg liegt die Überlegung zugrunde, dass eine Festlegung des Driftwertes als Mittelwert im resultierenden Intervall bewirkt, dass ein mit der Festlegung verbundener Fehler höchstens die Hälfte der Intervallbreite betragen kann. Ein Risiko, dass für den resultierenden Driftwert ein größerer Fehler vorliegt, wird auf diesem Wege minimiert.

Gemäß einer Ausgestaltung der Erfindung ist vorgesehen, dass ein kritischer Driftwert $\Omega c$ festgelegt wird und geprüft wird, ob sich der kritische Driftwert im resultierenden Driftintervall befindet und/oder der resultierende Driftwert $\Omega r$ den kritischen Driftwert überschreitet.

Durch Festlegung eines kritischen Driftwertes kann für eine Applikation, die von einer Kommunikation über die beiden Kommunikationseinrichtungen abhängig ist, entschieden werden, wie lange die Applikation sicher betrieben werden kann. Insbesondere kann für den sicheren Betrieb der Applikation eine Synchronisation der die Applikation durchführenden Einheiten erforderlich sein, damit Prozessschritte der Applikation mit einem synchronisierten Datenaustausch über die erste Kommunikationseinrichtungen und die zweite Kommunikationseinrichtung ermöglicht wird. Eine Gefährdung einer reibungslosen Synchronisation über einen minimal geforderten Zeitraum kann bei Erreichen oder Überschreiten des kritischen Driftwertes gefährdet, sodass weitere Maßnahmen abgeleitet werden können (beispielsweise eine Korrektur der Zeitbasen zur Verringerung des Zeitversatzes).

Gemäß einer Ausgestaltung der Erfindung ist vorgesehen, dass für den zweiten Ablauf ein Zeitintervall festgelegt wird, in dem alle zu betrachtenden früheren Messschritte und späteren Messschritte liegen müssen.

Eine Auswertung kann jeweils nach Ablauf des Zeitintervalls erfolgen, indem der dritte Ablauf durchgeführt wird. Bei der Bestimmung der Länge des Zeitintervalls kann berücksichtigt werden, dass für die Durchführung des zweiten Ablaufes die folgenden Bedingungen erfüllt sind.

Das Zeitintervall muss lang genug sein, damit die geforderte Anzahl an Messschritten durchgeführt werden kann. Außerdem ist zu berücksichtigen, dass das Zeitintervall lang genug sein muss, damit sich eine Drift des Zeitversatzes messtechnisch überhaupt feststellen lässt.

Andererseits ist zu berücksichtigen, dass eine Veränderung der äußeren Bedingungen, insbesondere der Temperatur, eine Vergrößerung oder Verkleinerung der Drift bewirken können, die aber zur Beurteilung der Drift keine Berücksichtigung finden sollen. Temperaturschwankungen erzeugen sozusagen eine reversible Vergrößerung oder Verkleinerung des Zeitversatzes, auf die daher innerhalb eines zulässigen Rahmens nicht reagiert werden muss und soll. Wenn das Zeitintervall nicht zu groß ist und das Driftintervall nicht zu klein, dann liegt die tatsächliche Drift trotz Schwankungen jederzeit im Driftintervall.

Andererseits lässt sich eine Drift aufgrund einer Temperaturänderung messtechnisch nicht von einer Drift aufgrund der Ganggenauigkeit der ersten Zeitbasis und der zweiten Zeitbasis unterscheiden. Daher sollte das Zeitintervall kurz genug sein, damit eine Temperaturänderung sich auf die in den Messschritten innerhalb des Zeitintervalls durchgeführten Bestimmungen des Zeitversatzes im Verhältnis zur zu erwartenden Ganggenauigkeit der ersten Zeitbasis und der zweiten Zeitbasis nur gering auswirken.

Es kann zum Beispiel realistisch angenommen werden, dass das messtechnisch ermittelte resultierende Intervall eine Intervallgröße (Spannweite) von 20 ppm hat. Weiterhin ist es realistisch, dass eine möglicher Zeitversatz um ein ppm pro Kelvin Temperaturänderung verschoben wird. Dieser Wert gilt für typische COTS Oszillatoren (d. h. Commercial-off-the-Shelf-Komponenten) mit dem Wirkprinzip eines schwingenden Kristalls. Wird nun eine Umgebung angenommen, bei der eine Temperaturänderung maximal 1 K/min betragen kann, ist eine Drift des Zeitversatzes innerhalb eines Zeitintervalls zum Messen von 1 Minute um den Faktor 20 kleiner als die Spannweite des resultierenden Intervalls. Im Ergebnis ist damit eine große Wahrscheinlichkeit gegeben, dass die tatsächliche Drift innerhalb des resultierenden Driftintervalls liegt. Somit ist es vorteilhaft, die Länge für das Zeitintervall des zweiten Ablaufes auf höchstens 1 Minute bevorzugt höchstens 30 Sekunden und noch bevorzugter höchstens 10 Sekunden festzulegen.

Gemäß einer Ausgestaltung der Erfindung ist vorgesehen, dass von der ersten Kommunikationseinrichtung und der zweiten Kommunikationseinrichtung die Zeitbasis der einen Kommunikationseinrichtung als Referenz definiert wird und die Zeitbasis der anderen Kommunikationseinrichtung unter Berücksichtigung der resultierenden Drift modifiziert wird.

Wird die Zeitbasis der einen Kommunikationseinrichtung als Referenz festgelegt, so kann durch eine Maßnahme bei der Zeitbasis der anderen Kommunikationseinrichtung bei Bedarf eine Verringerung des Zeitversatzes erreicht werden. Dies stellt sicher, dass die erste Zeitbasis und die zweite Zeitbasis dauerhaft innerhalb der zulässigen Abweichungen synchron laufen, wodurch vorteilhaft eine synchronisierte Kommunikation zwischen der ersten Kommunikationseinrichtung und der zweiten Kommunikationseinrichtung sichergestellt ist.

Für ein Angleichen der ersten Zeitbasis und der zweiten Zeitbasis können folgende an sich bekannte Maßnahmen durchgeführt werden. Die Zeitbasis, die nicht als Referenz verwendet wird, kann nach Bedarf abgebremst oder beschleunigt werden, um einen Zeitversatz zu der Zeitbasis, die als Referenz verwendet wird, zu verringern. Eine andere Möglichkeit besteht darin, die Zeitmessung sprunghaft zu korrigieren (sogenanntes Stepping).

Mit dem Verfahren können auch mehr als zwei Zeitbasen synchron gehalten werden. Dabei wird von den zu synchronisieren Zeitbasen eine Zeitbasis als Referenzzeitbasis verwendet und das erfindungsgemäße Verfahren, insbesondere der vorgenannte Schritt der Modifikation, jeweils mit jeder der anderen Zeitbasen durchgeführt.

Die genannte Aufgabe wird alternativ mit dem eingangs angegebenen Anspruchsgegenstand (Anlage) erfindungsgemäß auch dadurch gelöst, dass die Anlage eingerichtet ist, ein Verfahren zum rechnergestützten Überwachen gemäß einem der vorgenannten Ansprüche durchzuführen.

Als Anlage im Sinne der Erfindung ist eine technische Anlage zu verstehen, bei der ein Datenaustausch zwischen unterschiedlichen Kommunikationseinrichtungen der Anlage erforderlich ist. Dies ist insbesondere der Fall, wenn die Anlage mehrere Computer aufweist, die der Art betrieben werden müssen, dass ein synchronisierte Datenaustausch über die erste Kommunikationseinrichtung und die zweite Kommunikationseinrichtung erforderlich ist.

Gemäß einer Ausgestaltung der Erfindung ist vorgesehen, dass die Schnittstelle zum Aufbau der Kommunikationsverbindung durch eine Cloud bereitgestellt wird.

Die Anlage kann in diesem Falle aus einzelnen technischen Komponenten bestehen, deren Kommunikationsverbindung als Service beispielsweise durch einen Cloud Anbieter gewährleistet ist. Bei einer Kommunikation über eine Cloud können die Übertragungszeiten schwanken, so dass das erfindungsgemäße Verfahren besonders vorteilhaft Verwendung finden kann, um diese Schwankungen durch Bildung des resultierenden Driftintervalls die Auswirkungen dieser Schwankungen bestmöglich abzuschwächen.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Gemäß einer Ausgestaltung der Erfindung ist vorgesehen, dass die Anlage eine bahntechnische Anlage ist.

Wie bereits erwähnt, profitieren Bahntechnische Anlagen wie zum Beispiel Stellwerke in besonderem Maße von der Anwendung des erfindungsgemäßen Verfahrens, da eine zuverlässige Synchronisation kommunizierender Komponenten der Bahntechnischen Anlage sichergestellt sein muss.

Mit der Anlage lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Anlage.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugzeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Merkmalen der Erfindung kombinierbar.

Es zeigen:

Figur 1 ein Ausführungsbeispiel der erfindungsbemäßen Anlage mit ihren Wirkzusammenhängen schematisch,

Figur 2 ein Ausführungsbeispiel einer Computer-Infrastruktur der Kommunikationseinrichtungen in der Anlage gemäß Figur 1 mit je einem Computer als Blockschaltbild aus Funktionseinheiten, wobei Programmmodule abgearbeitet werden, die jeweils in einem oder mehreren Prozessoren ablaufen können und wobei die Schnittstellen demgemäß softwaretechnisch oder hardwaretechnisch ausgeführt sein können,

Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind,

Figur 4 schematisch die Durchführung des Christian Algorithmus mit zwei um einen Zeitversatz $\delta$ verschobenen Zeitbasen im ersten Ablauf,

Figur 5 und 6 die Ermittlung von Zeitversatzintervallen in einer Darstellung des Zeitversatzes $\Delta$ über der Zeit t im zweiten Ablauf, wobei jeweils obere Schranken (in Figur 5) und untere Schranken (Figur 6) für Driftintervalle ermittelt werden,

Figur 7 die Ermittlung eines resultierenden Driftintervalls aus einzelnen Driftintervallen in einer Darstellung der Drift $\Omega$ über jeweiligen Paaren von Messungen n, n+x in einem dritten Ablauf.

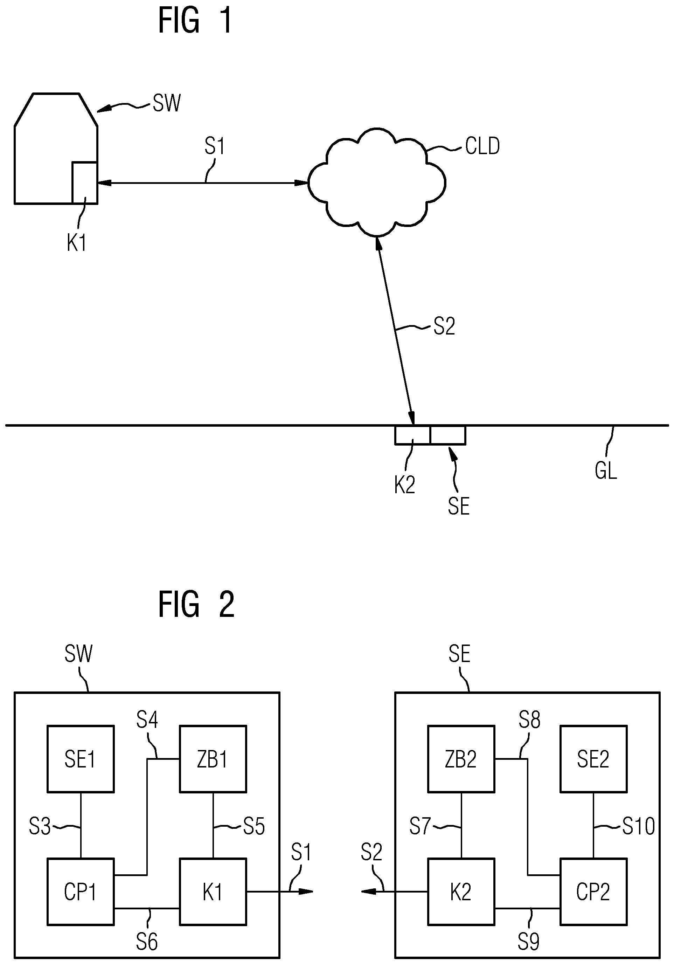

Figur 1 zeigt schematisch eine Anlage in einer Bahnumgebung, in der ein Ausführungsbeispiel des erfindungsgemäßen Verfahrens ablaufen kann. Dargestellt ist ein Gleis GL, in das eine streckenseitige Einrichtung SE eingebaut ist. Diese stellt eine zweite Kommunikationseinrichtung K2 zur Verfügung, die über eine zweite Schnittstelle S2 mit einer Cloud CLD verbunden ist. Eine andere Komponente wird durch ein Stellwerk SW zur Verfügung gestellt. Dieses weist eine erste Kommunikationseinrichtung K1 auf, welche über eine erste Schnittstelle S1 ebenfalls mit der Cloud CLD verbunden ist.

Über die Cloud CLD können somit die erste Kommunikationseinrichtung K1 und die zweite Kommunikationseinrichtung K2 unter Nutzung der ersten Schnittstelle S1 und der zweiten Schnittstelle S2 miteinander kommunizieren. Möglich ist es auch, dass eine direkte Kommunikation zwischen der ersten Kommunikationseinrichtung K1 und der zweiten Kommunikationseinrichtung K2 kabelgebunden oder über eine Funkschnittstelle gewährleistet ist (nicht dargestellt). Auch können die Bahnkomponenten, die miteinander kommunizieren, auch durch andere als die dargestellten Bahnkomponenten des Stellwerks SW und der streckenseitigen Einrichtung SE gewährleistet sein.

Das Stellwerk SW und die streckenseitige Einrichtung SE sind mit ihren Funktionskomponenten in Figur 2 schematisch als Blockschaltbild dargestellt. Das Stellwerk SW weist einen ersten Computer CP1 auf, der über eine dritte Schnittstelle S3 mit einer ersten Speichereinrichtung SE1 verbunden ist. Außerdem ist eine erste Zeitbasis ZB1 vorgesehen, die über eine vierte Schnittstelle S4 mit dem Computer CP1 und über eine fünfte Schnittstelle S5 mit der ersten Kommunikationseinrichtung K1 verbunden ist. Ergebnisse einer auf dem Stellwerk laufenden Anwendung, die durch den ersten Computer CP1 berechnet werden, können überdies über eine sechste Schnittstelle S6 an die erste Kommunikationseinrichtung K1 übermittelt werden.

Die erste Kommunikationseinrichtung K1 dient zur Kommunikation mit der zweiten Kommunikationseinrichtung K2 in der streckenseitigen Einrichtung SE. Dies ist zu Figur 1 beschrieben worden. Die zweite Kommunikationseinrichtung K2 ist über eine siebte Schnittstelle S7 mit einer zweiten Zeitbasis ZB2 verbunden. Über die erste Zeitbasis ZB1 und die zweite Zeitbasis ZB2 ist eine synchronisierte Kommunikation der ersten Kommunikationseinrichtung K1 mit der zweiten Kommunikationseinrichtung K2 sichergestellt.

Ansonsten ist die Hardware-Infrastruktur der streckenseitigen Einrichtung SE analog zu derjenigen des Stellwerks SW aufgebaut, zumindest auf der in Figur 2 dargestellten abstrakten Ebene. D. h., dass die zweite Zeitbasis ZB2 über eine achte Schnittstelle S8 mit einem zweiten Computer CP2 verbunden ist, der seinerseits über eine neunte Schnittstelle S9 mit der zweiten Kommunikationseinrichtung K2 verbunden ist. Auch der zweite Computer CP2 weist über eine zehnte Schnittstelle S10 eine Verbindung zu einer zweiten Speichereinrichtung SE2 auf.

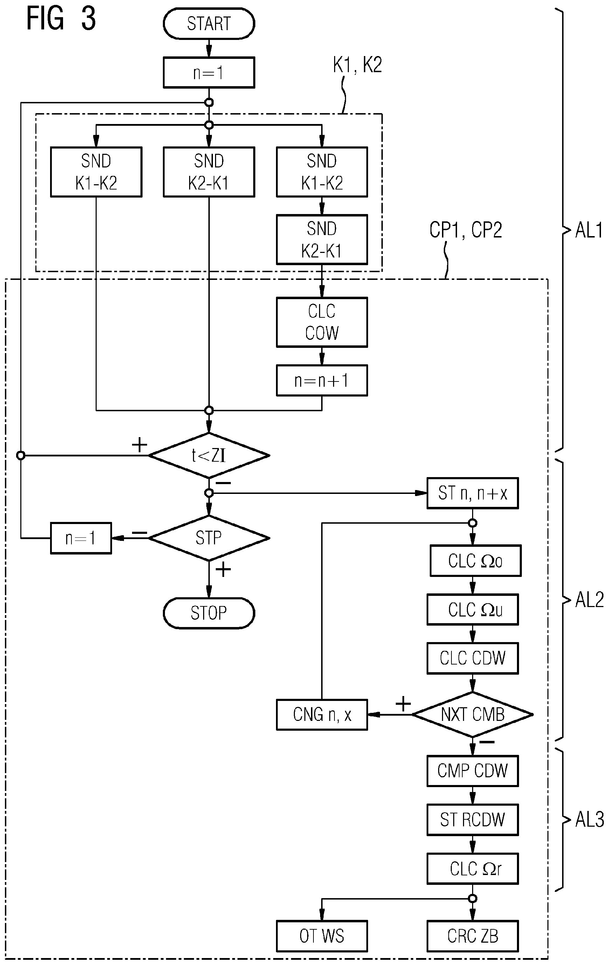

Anhand von Figur 3 kann das erfindungsgemäße Verfahren in einem Ablaufdiagramm nachvollzogen werden. Nach einem Start des Verfahrens wird eine Laufvariable n=1 gesetzt, da der erste Messschritt n durchgeführt wird. n steht somit für den Messschritt und ist beim ersten Durchlauf daher 1.

Je nach den Erfordernissen des ablaufenden Verfahrens können anschließend weitere Verfahrensschritte ausgewählt werden, wobei in Figur 3 nicht näher dargestellt ist, wie diese Erfordernisse ermittelt werden. Daher sind die drei möglichen Verfahrensschritte einfach parallel dargestellt. Danach kann ein Sendeschritt SND K1-K2 durchgeführt werden, bei dem eine Nachricht von der ersten Kommunikationseinrichtung K1 zu der zweiten Kommunikationseinrichtung K2 gesendet wird. Alternativ kann ein Sendeschritt SND K2-K1 durchgeführt werden, wenn eine Nachricht von der zweiten Kommunikationseinrichtung K2 zu der ersten Kommunikationseinrichtung K1 gesendet werden soll. Welche Richtung beim Senden erforderlich ist, hängt von den ablaufenden Prozessen der entsprechenden Applikationen ab. Das Senden von Nachrichten, die mit der Verarbeitung von Applikationen zu tun haben, werden vorrangig in Bezug zu der dritten Alternative durchgeführt, die im Folgenden beschrieben wird.

Danach wird, um einen ersten Ablauf AL1 des erfindungsgemäßen Verfahrens zu gewährleisten, zunächst ein Sendeschritt SND K1-K2 durchgeführt, um eine Nachricht von der ersten Kommunikationseinrichtung K1 zur zweiten Kommunikationseinrichtung K2 zu senden. Diese reagiert darauf, indem eine Nachricht in einem Sendeschritt SND K2-K1 von der zweiten Kommunikationseinrichtung K2 zur ersten Kommunikationseinrichtung K1 zurückgesendet wird. Wie im Folgenden noch näher erläutert wird, können diese beiden Sendeschritte herangezogen werden, um in einem Berechnungsschritt CLC COW für die beiden Sendeschritte ein Zeitversatzintervall COW zu berechnen, in dem ein möglicher tatsächlicher Zeitversatz $\Delta(n)$ liegen kann. Anschließend wird in einem Schritt n=n+1 die Laufvariable n um 1 erhöht.

Egal, welche der drei Alternativen durchgeführt wurde, wird in einem nachfolgenden Abfrageschritt t>ZI abgefragt, ob die abgelaufene Zeit t noch kleiner als ein definiertes Zeitintervall ZI (welches beispielsweise auf eine Minute festgelegt ist) noch nicht erreicht wurde. Ist dies der Fall, findet eine Wiederholung einer der drei oben genannten alternativen Verfahrensabläufe statt. Ist allerdings das Zeitintervall ZI abgelaufen, so ist der erste Ablauf AL1 abgeschlossen, wobei mindestens drei Mal die Verfahrensalternative zur Ermittlung eines Zeitversatzintervalls COW durchgeführt wurde.

Nach Abschluss des ersten Ablaufs AL1 wird in einem nächsten Abfrageschritt STP gefragt, ob das Verfahren zur Durchführung der Applikation insgesamt gestoppt werden soll. Ist dies der Fall, endet das Verfahren mit STOP. Ist dies nicht der Fall, wird die Laufvariable in einem Schritt n=1 wieder auf 1 gesetzt, sodass der erste Ablauf AL1 von Neuem beginnen kann.

Sobald ein erste Ablauf AL1 abgeschlossen wurde, kann ein zweiter Ablauf AL2 begonnen werden. Bei diesem wird in einem Festsetzungsschritt ST ein vergangener früherer Messschritt n und späterer Messschritt n+1 ausgewählt. Durch Vergleich der Zeitversatzintervalle COW (hierzu im Folgenden noch mehr) kann in einem Berechnungsschritt CLC $\Omega_o$ eine obere Schranke für eine maximal mögliche Drift und in einem Berechnungsschritt CLC $\Omega_u$ eine untere Schranke für eine minimal mögliche Drift berechnet werden. Unter Berücksichtigung dieser beiden Schranken lässt sich in einem Berechnungsschritt CLC CDW ein Driftintervall CDW berechnen, welches für die weiteren Betrachtungen im dritten Ablauf AL3 von Bedeutung sind (auch hierzu im Folgenden noch mehr).

In einem Abfrageschritt NXT CMB wird abgefragt, ob eine weitere Kombination von Messschritten untersucht werden soll. In diesem Fall wird in einem Änderungsschritt CNG n,x ein anderer früherer Messschritt n und/oder ein anderer Abstand x zwischen dem früheren Messschritt n und dem späteren Messschritt n+x festgelegt. Das Verfahren, wie oben erläutert, zur Ermittlung eines weiteren Driftintervalls CDW kann erneut durchgeführt werden.

Sollen keine weiteren Kombinationen CMB von Messschritten n, n+x untersucht werden, kann der dritte Ablauf AL3 beginnen. Dieser besteht aus einem Vergleichsschritt CMP CDW, bei dem die zur Verfügung stehenden, im zweiten Ablauf AL2 ermittelten Driftintervalle CDW miteinander verglichen werden. Hierbei wird erfindungsgemäß die kleinste ermittelte obere Schranke des Driftintervalls $\Omega_o$ und die größte ermittelte untere Schranke $\Omega_u$ der ermittelten Driftintervalle CDW aus dem zweiten Ablauf AL2 ausgewählt, wobei diese unterschiedlichen Driftintervallen CDW angehören können. In einem nachfolgenden Festsetzungsschritt ST RCDW wird aus diesen beiden ermittelten Schranken, also der ermittelten oberen Schranke der Drift $\Omega_o$ und der ermittelten unteren Schranke $\Omega_u$ ein resultierendes Driftintervall RCDW ermittelt, bei dem in den Messschritten n auftretende Messfehler mit Blick auf die zur Verfügung stehenden Daten minimiert sind. Optional kann aus dem resultierenden Driftfenster RCDW ein resultierender Driftwert $\Omega_r$ in einem Berechnungsschritt CLC $\Omega_r$ berechnet werden, in dem der resultierende Driftwert $\Omega_r$ beispielsweise als Mittelwert aus der oberen Schranke der Drift $\Omega_o$ und der unteren Schranke der Drift $\Omega_u$ (bezogen auf das resultierende Driftfenster RCDW) berechnet wird.

Das ermittelte resultierende Driftintervall RCDW oder der ermittelte resultierende Driftwert $\Omega_r$ können im weiteren Verfahrensablauf unterschiedlichen Zwecken dienen, von denen in Figur 3 alternativ zwei dargestellt sind. Beispielsweise kann ein Ausgabeschritt OT WS zur Ausgabe eines Warnsignal WS durchgeführt werden, sobald der ermittelte resultierende Driftwert $\Omega_r$ einen kritischen Driftwert $\Omega_c$, der vorher festgelegt wurde, überschreitet. Das Warnsignal kann beispielsweise ausgegeben werden oder automatisch verarbeitet werden, um z. B. einen laufenden Prozess von Nutzprogrammen für die auf den Computern CP laufende (bahnspezifische) Applikation zu stoppen, bevor eine Synchronisation der ersten Kommunikationseinrichtung K1 mit der zweiten Kommunikationseinrichtung K2 nicht mehr möglich ist.

Alternativ ist es möglich, in einem Korrekturschritt CRC ZB eine der beiden Zeitbasen ZB zu korrigieren, also die erste Zeitbasis ZB1 und die zweite Zeitbasis ZB2 neu zu synchronisieren. Dabei kann eine Zeitbasis als Referenz genutzt werden und die andere Zeitbasis an die als Referenz genutzte Zeitbasis angepasst werden (schrittweise oder durch Beschleunigen oder Verlangsamen der zu korrigierenden Zeitbasis).

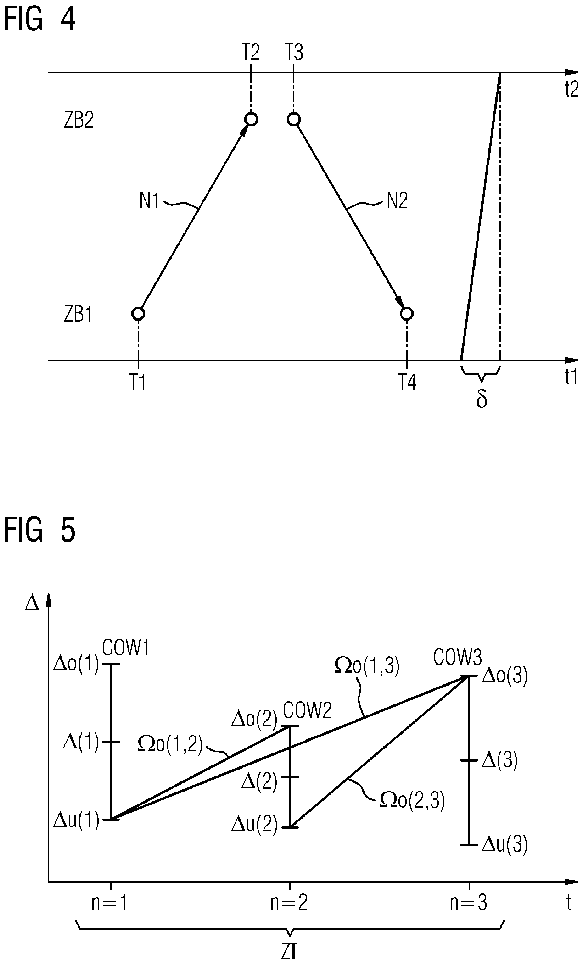

In Figur 4 ist schematisch dargestellt, wie ein erster Zeitpunkt T1, ein zweiter Zeitpunkt T2, ein dritter Zeitpunkt T3 und ein vierter Zeitpunkt T4 für den Christian Algorithmus gemessen werden. Die Zeitpunkte T1 ... T4 sind auf je einer ersten Zeitachse t1 für die erste Zeitbasis ZB1 und einer zweiten Zeitachse t2 für die zweite Zeitbasis ZB2 dargestellt. Dies macht deutlich, dass die genannten Zeitpunkte mit verschiedenen Zeitbasen ermittelt werden, zwischen denen ein real existierender Zeitversatz $\delta$, der zwischen der ersten Zeitachse t1 und der zweiten Zeitachse t2 eingezeichnet ist, bestehen kann. Dieser ist jedoch nicht bekannt und wird unter Anwendung des Christian Algorithmus unter Berücksichtigung der vier genannten Zeitpunkte in der bereits beschriebenen Weise abgeschätzt.

Das Ergebnis mehrerer solcher Abschätzungen n = 1 ... 3 ist in Figur 5 dargestellt, wobei der Abstand der einzelnen Messungen n in Figur 5 auf einer Zeitachse t (x-Achse) dargestellt ist. Auf der y-Achse ist der berechnete Zeitversatz Δ dargestellt. Die Messungen n = 1 ... 3 liegen alle innerhalb eines festgelegten Zeitintervalls ZI. Die zu den einzelnen Messungen n gehörenden Zeitversatzintervallen COW1 ... COW3 werden alle gemäß Figur 4 nach dem Christian Algorithmus berechnet. Hierbei handelt es sich um Intervalle, innerhalb derer der tatsächlich vorliegende Zeitversatz Δ liegen muss. Diese weisen jeweils beispielsweise für die erste Messung (n = 1) eine untere Schranke Δu(1) und eine obere Schranke Δo(1) auf. Zusätzlich kann ein Mittelwert Δ(1) ermittelt werden, der für die hier vorgestellte weitere Berechnung allerdings nicht von Bedeutung ist. Dies gilt analog auch für das zweite Zeitversatzfenster COW2 und das dritte Zeitversatzfenster COW3. Weitere Zeitversatzfenster COW4 ... können innerhalb des Zeitintervalls ZI bestimmt werden (nicht dargestellt).

Dadurch, dass die einzelnen Zeitversatzintervalle COW1 ... COW3 innerhalb ihrer Spannweite den tatsächlichen Zeitversatz Δ zuverlässig enthalten, kann unter Kenntnis der zeitlichen Abstände der einzelnen Messungen n unter Berücksichtigung jeweils eines Paares von Messungen eine obere Schranke $\Omega o(n, n+x)$ bestimmt werden, wobei n eine frühere Messung und n+x eine spätere Messung mit dem Abstand x von der Messung n darstellen. Dargestellt in Figur 5 ist beispielsweise die Ermittlung der oberen Schranke $\Omega o(1, 2)$ für n = 1 und x = 1, wobei deutlich wird, dass die Drift bei Betrachtung der beiden zugehörigen Zeitversatzintervalle COW1, COW2 höchstens so groß sein kann, dass dieser sich von der unteren Schranke Δu(1) des ersten Zeitversatzintervalls COW1 zur oberen Schranke Δo(2) des zweiten Zeitversatzintervalls COW2 entwickeln kann. Mit anderen Worten ist die Steigung einer Geraden Δo(1, 2) durch die beiden genannten Punkte bei Kenntnis des zeitlichen Abstands der Messungen 1 und 2 gerade die maximal mögliche Drift bei Betrachtung dieser beiden Zeitversatzfenster. Der Figur 5 kann entnommen werden, dass dieses Verfahren auch für n = 1 und x = 2 sowie n = 2 und x = 1 durchgeführt werden kann. Dabei können die zeitlichen Abstände der Einzelmessungen n beispielsweise durch Differenzbildung zwischen den jeweiligen Zeitpunkten t4 (vgl. Figur 1) ermittelt werden.

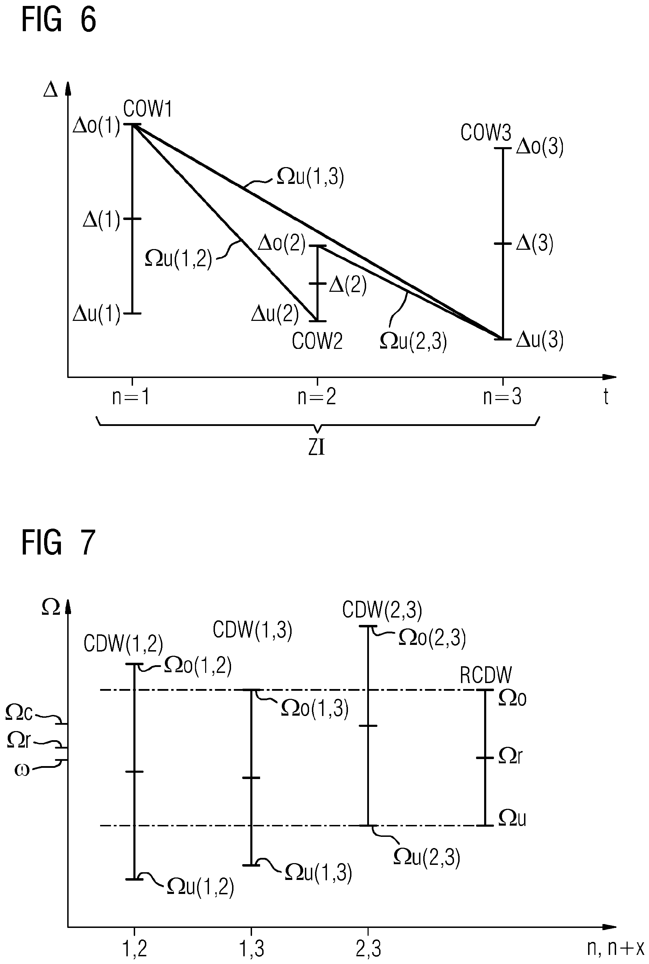

In Figur 6 ist dargestellt, wie in analoger Weise auch untere Schranken Δu(n, n+x) für die Drift berechnet werden können. In Figur 6 sind dieselben Zeitversatzintervalle COW1, COW2 und COW 3 wie in Figur 5 dargestellt. Die Ermittlung der unteren Schranken für die Drift $\Omega u$ soll unter Hinzuziehung des ersten Zeitversatzintervalls COW1 und des zweiten Zeitversatzintervalls COW2 erläutert werden. Anders als bei Figur 5 werden nun zur Ermittlung der unteren Schranke $\Omega u(1, 2)$ die obere Schranke Δo(1) des ersten Zeitversatzintervalls COW1 und die untere Schranke Δu(2) des zweiten Zeitversatzintervalls COW2 herangezogen. Wieder ergibt sich durch Verbinden dieser beiden Punkte eine Gerade $\Omega u(1, 2)$. Auch in diesem Fall können die untere Schranke $\Omega u(1, 3)$ und die untere Schranke $\Omega u(2, 3)$ analog berechnet werden.

In Figur 7 ist dargestellt, dass zu jeder der Kombinationen von betrachteten Messungen Driftintervalle CDW ermittelt wurden, also für die Messungen 1 und 2 das Driftintervall CDW(1, 2), für die Messungen 1 und 3 das Driftintervall CDW(1, 3) und für die Messungen 2 und 3 das Driftintervall CDW(2, 3). Diese stellen jeweils das Intervall dar, innerhalb dessen eine wahre Drift $\omega$ zuverlässig liegt. Zu bemerken ist, dass die tatsächliche Drift $\omega$ nach wie vor nicht bekannt ist.

Durch das Vorhandensein von mehreren Driftintervallen CDW kann jedoch das resultierende Driftintervall RCDW weiter eingegrenzt werden. Hierzu wird die kleinste obere Schranke $\Omega o$ der Driftintervalle CDW (in Figur 7 $\Omega o(1, 3)$) sowie die größte untere Schranke $\Omega u$ der Driftintervalle (in Figur 7 $\Omega u(2, 3)$) jeweils als obere Schranke $\Omega o$ und als untere Schranke $\Omega u$ des resultierenden Driftintervalls RCDW festgelegt. Man könnte auch sagen, dass es sich bei dem resultierenden Driftintervall RCDW um die Schnittmenge aus den ausgewerteten einzelnen Driftintervallen CDW handelt. Hierdurch wird dieses Intervall eingegrenzt und es lässt sich beispielsweise durch Bildung des Mittelwerts aus der oberen Schranke $\Omega o$ und der unteren Schranke $\Omega u$ des resultierenden Driftintervalls RCDW eine resultierende Drift $\Omega r$ berechnen. Diese Berechnung basiert allerdings auf einer statistischen Auswertung und kann, wie in Figur 7 dargestellt, von der tatsächlichen Drift $\omega$ abweichen.

In Figur 7 ist auch dargestellt, dass für die Drift ein kritischer Wert $\Omega c$ festgelegt werden kann, um beurteilen zu können, ob dieser für eine zuverlässige Prozessführung beispielsweise bei der Berechnung von Applikationen durch Nutzprogramme hinnehmbar ist.

Bezugszeichenliste

| GL | Gleis |
| SW | Stellwerk |
| SE | streckenseitige Einrichtung |
| CLD | Cloud |
| ZI | Zeitintervall |
| ZB1, ZB2 | Zeitbasis |
| SE1, SE2 | Speichereinrichtung |
| CP1, CP2 | Computer |

| S1 ... S10 | Schnittstelle |
| K1, K2 | Kommunikationseinrichtung |
| ZB1, ZB2 | Zeitbasis |

| T1 ... T4 | Zeitpunkt |
| N1, N2 | Nachricht |
| n | Messschritte |
| x | Abstand zwischen Messschritten |
| t | Zeit |
| $\Delta$ | Zeitversatz |
| COW | Zeitversatzintervall |
| $\Delta$o | obere Schranke des Zeitversatzintervalls |
| $\Delta$u | untere Schranke des Zeitversatzintervalls |
| $\Delta$ | tatsächlich hat Zeitversatz |
| $\Omega$ | Drift |
| CDW | Driftintervall |
| RCDW | resultierendes Driftintervall |
| $\Omega$o | obere Schranke des Driftintervalls |
| $\Omega$u | untere Schranke des Driftintervalls |
| $\Omega$r | resultierender Wert |
| $\Omega$o | kritischer Wert |
| $\omega$ | tatsächliche Drift |

| AL1 ... AL3 | Ablauf |
| SND | Sendeschritt |
| CLC | Berechnungsschritt |
| STP | Abfrageschritt Verfahrensende |
| ST | Festsetzungsschritt |
| CMP | Vergleichsschritt |
| CNG | Änderungsschritt |
| OT | Ausgabeschritt |
| CRC ZB | Korrekturschritt für Zeitbasis |
| NXT CMB | Abfrageschritt nach weiteren Kombinationen |

## Patentansprüche

1. Verfahren zum rechnergestützten Überwachen einer ersten Zeitbasis (ZB1) einer ersten Kommunikationseinrichtung und einer zweiten Zeitbasis (ZB2) einer zweiten Kommunikationseinrichtung, wobei in einem ersten Ablauf mindestens drei Messschritte (n) durchgeführt werden, wobei bei jedem Messschritt jeweils

   • zu einem ersten Zeitpunkt (T1), der auf die erste Zeitbasis (ZB1) bezogen ist, eine erste Nachricht (N1) von der ersten Kommunikationseinrichtung (K1) zu der zweiten Kommunikationseinrichtung (K2) gesendet wird,
   • zu einem zweiten Zeitpunkt (T2), der auf die zweite Zeitbasis (ZB2) bezogen ist, die erste Nachricht (N1) von der zweiten Kommunikationseinrichtung (K2) empfangen wird,
   • zu einem dritten Zeitpunkt (T3), der auf die zweite Zeitbasis (ZB2) bezogen ist, eine zweite Nachricht (N2) von der zweiten Kommunikationseinrichtung (K2) zu der ersten Kommunikationseinrichtung (K1) gesendet wird, und
   • zu einem vierten Zeitpunkt (T4), der auf die erste Zeitbasis (ZB1) bezogen ist, die zweite Nachricht (N2) von der ersten Kommunikationseinrichtung (K1) empfangen wird,
   • ein Zeitversatzintervall (COW), in dem ein Zeitversatz zwischen der ersten Zeitbasis und der zweiten Zeitbasis liegen kann, aus dem ersten Zeitpunkt, dem zweiten Zeitpunkt, dem dritten Zeitpunkt und dem vierten Zeitpunkt bestimmt wird,

   wobei in einem zweiten Ablauf mehrfach für einen früheren Messschritt (n) und einen späteren Messschritt (n+x)

   • eine maximal mögliche Drift in der Zeit zwischen dem früheren Messschritt und dem späteren Messschritt unter Berücksichtigung der unteren Schranke ($\Delta$u(n)) des Zeitversatzintervalls für den früheren Messschritt und der oberen Schranke (Δo(n+1)) des Zeitversatzintervalls für den späteren Messschritt ermittelt wird,
• eine minimal mögliche Drift in der Zeit zwischen dem früheren Messschritt und dem späteren Messschritt unter Berücksichtigung der oberen Schranke (Δo(n)) des Zeitversatzintervalls für den früheren Messschritt und der unteren Schranke (Δu(n+x)) des Zeitversatzintervalls für den späteren Messschritt ermittelt wird,
• unter Berücksichtigung der maximal möglichen Drift eine obere Schranke (Ωo(n, n+x)) und unter Berücksichtigung der minimal möglichen Drift eine untere Schranke (Ωu(n, n+x)) eines Driftintervalls (CDW), in der eine die zeitliche Änderung des Zeitversatzes beschreibende relative Drift (ω) liegen kann, berechnet wird,

**dadurch gekennzeichnet,**

**dass** in einem dritten Ablauf von mehreren Driftintervallen (CDW)

• die niedrigste obere Schranke als obere Schranke eines resultierendes Driftintervalls (RCDW) für die relative Drift festgesetzt wird und
• die höchste untere Schranke als untere Schranke des resultierenden Driftintervalls (RCDW) für die relative Drift festgesetzt wird.

2. Verfahren nach Anspruch 1
**dadurch gekennzeichnet,**
**dass** der Zeitversatz bei einem Messschritt (n) auf Grundlage

• der Sendezeit der ersten Nachricht (N1) als Zeitdifferenz zwischen dem ersten Zeitpunkt (T1) und dem zweiten Zeitpunkt (T2) und
• der Sendezeit der zweiten Nachricht (N2) als Zeitdifferenz zwischen dem dritten Zeitpunkt (T3) und dem vierten Zeitpunkt (T4)

berechnet wird.

3. Verfahren nach einem der voranstehenden Ansprüche,
**dadurch gekennzeichnet,**
**dass** ein maximal möglicher Fehler für den Zeitversatz (Δ) bei einem Messschritt (n) unter Berücksichtigung

• einer in der ersten Kommunikationseinrichtung (K1) gemessenen Nachrichtenlaufzeit als Zeitdifferenz zwischen dem ersten Zeitpunkt (T1) und dem vierten Zeitpunkt (T4) und
• einer in der zweiten Kommunikationseinrichtung (K2) gemessenen Reaktionszeit als Zeitdifferenz zwischen dem zweiten Zeitpunkt (T2) und dem dritten Zeitpunkt (T3)

berechnet wird.

4. Verfahren nach einem der voranstehenden Ansprüche,
**dadurch gekennzeichnet,**
**dass** die untere Schranke des Zeitversatzintervalls Δu(n) des Messschrittes (n) berechnet wird nach der Formel:

$$\Delta u(n) = T3(n) - T4(n)$$

die obere Schranke des Zeitversatzintervalls Δo(n) des Messschrittes (n) berechnet wird nach der Formel:

$$\Delta o(n) = T2(n) - T1(n).$$

5. Verfahren nach einem der voranstehenden Ansprüche,
**dadurch gekennzeichnet,**
**dass** eine Zeitdifferenz zwischen dem früheren Messschritt (n) und dem späteren Messschritt (n+x) berechnet wird, wobei zur Ermittlung der Zeitdifferenz die gemessenen ersten Zeitpunkte (T1) oder die gemessenen zweiten Zeitpunkte (T2) oder die gemessenen dritten Zeitpunkte (T3) oder die gemessenen vierten Zeitpunkte (t4) des früheren Messschrittes und des späteren Messschrittes berücksichtigt werden.

6. Verfahren nach Anspruch 5,

**dadurch gekennzeichnet,**
**dass** die obere Schranke $\Omega o(n, n+x)$ des Driftintervalls berechnet wird nach der Formel:

$$\Omega o\,(n,\ n+x)\ =\ (\Delta o\,(n+x)-\Delta u\,(n))\ /\ (T4\,(n+x)-T4\,(n))$$

und die untere Schranke $\Omega u(n, n+x)$ des Driftintervalls berechnet wird nach der Formel:

$$\Omega u\,(n,\ n+x)\ =\ (\Delta u\,(n+x)-\Delta o\,(n))\ /\ (T4\,(n+x)-T4\,(n))$$

wobei

*n* der frühere Messschritt,
*n+1* der spätere Messchritt,
$\Delta u(n)$ die untere Schranke des Zeitversatzintervalls des früheren Messschrittes,
$\Delta u(n+x)$ die untere Schranke des Zeitversatzintervalls des späteren Messschrittes,
$\Delta o(n)$ die obere Schranke des Zeitversatzintervalls des früheren Messschrittes,
$\Delta o(n+x)$ die obere Schranke des Zeitversatzintervalls des späteren Messschrittes,
*T4(n)* der vierte Zeitpunkt des früheren Messschrittes,
*T4(n+x)* der vierte Zeitpunkt des späteren Messschrittes ist.

7. Verfahren nach einem der voranstehenden Ansprüche,
**dadurch gekennzeichnet,**
**dass** ein resultierender Driftwert ($\Omega r$) bestimmt wird als Mittelwert der oberen Schranke ($\Omega o$) des resultierenden Driftintervalls (RCDW) und der unteren Schranke ($\Omega u$) des resultierenden Driftintervalls (RCDW).

8. Verfahren nach einem der voranstehenden Ansprüche,
**dadurch gekennzeichnet,**
**dass** ein kritischer Driftwert ($\Omega c$) festgelegt wird und geprüft wird, ob sich der kritische Driftwert im resultierenden Driftintervall (RCDW)befindet und/oder der resultierende Driftwert ($\Omega r$) den kritischen Driftwert überschreitet.

9. Verfahren nach einem der voranstehenden Ansprüche,
**dadurch gekennzeichnet,**
**dass** für den zweiten Ablauf ein Zeitintervall festgelegt wird, in dem alle zu betrachtenden früheren Messschritte (n) und späteren Messschritte (n+x) liegen müssen.

10. Verfahren nach Anspruch 9,
**dadurch gekennzeichnet,**
**dass** von der ersten Kommunikationseinrichtung (K1) und der zweiten Kommunikationseinrichtung (K2) die Zeitbasis der einen Kommunikationseinrichtung als Referenz definiert wird und die Zeitbasis der anderen Kommunikationseinrichtung unter Berücksichtigung der resultierenden Drift ($\Omega r$) modifiziert wird.

11. Anlage mit einer ersten Kommunikationseinrichtung (K1), aufweisend eine erste Zeitbasis (ZB1), mit einer zweiten Kommunikationseinrichtung (K2), aufweisend eine zweite Zeitbasis (ZB2) und mit einer Schnittstelle (S1, S2) zum Aufbau einer Kommunikationsverbindung zwischen der ersten Kommunikationseinrichtung und der zweiten Kommunikationseinrichtung,
**dadurch gekennzeichnet,**
**dass** die Anlage eingerichtet ist, ein Verfahren zum rechnergestützten Überwachen gemäß einem der vorgenannten Ansprüche durchzuführen.

12. Anlage nach Anspruch 11,
**dadurch gekennzeichnet,**
**dass** die Schnittstelle zum Aufbau der Kommunikationsverbindung durch eine Cloud (CLD) bereitgestellt wird.

13. Anlage nach Anspruch 11 oder 12,
**dadurch gekennzeichnet,**
**dass** die Anlage eine bahntechnische Anlage ist.

14. Computerprogrammprodukt mit Programmbefehlen zur Durchführung des Verfahrens nach einem der Ansprüche 1 - 10.

15. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.

## FIG 1

SW

S1

CLD

K1

S2

GL

K2

SE

## FIG 2

SW

SE1    S4    ZB1

S3            S5    S1

CP1    K1

S6

SE

ZB2    S8    SE2

S7            S10

S2    K2    CP2

S9

# FIG 3

```
            ( START )
                |
             [ n=1 ]                        K1, K2
                |
    +-----------o-----------+
    |           o           |
    |           |           |
    |           |           |
 [ SND ]     [ SND ]     [ SND ]
 [ K1-K2]    [ K2-K1]    [ K1-K2]
    |           |           |
    |           |        [ SND ]
    |           |        [ K2-K1]            CP1, CP2              AL1
    |           |           |
    |           |        [ CLC ]
    |           |        [ COW ]
    |           |           |
    |           |       [ n=n+1 ]
    |           |           |
    +-----------o-----------+
                |
        +   < t<ZI >
    o---------------
                | -
                o----------------------------> [ ST n, n+x ]
        < STP >                                      o
  [ n=1 ] <--- -                                      |
                | +                             [ CLC Ωo ]
             ( STOP )                                 |
                                               [ CLC Ωu ]         AL2
                                                     |
                                               [ CLC CDW ]
                                                     |
                             [ CNG n, x ] <--+  < NXT CMB >
                                                     | -
                                               [ CMP CDW ]
                                                     |
                                               [ ST RCDW ]        AL3
                                                     |
                                               [ CLC Ωr ]
                                                     o
                             [ OT WS ]         [ CRC ZB ]
```

# FIG 4

$$T2 \quad T3$$

ZB2

N1 $\quad$ N2

ZB1

$$T1 \qquad\qquad T4 \qquad t1$$

$$\delta$$

# FIG 5

$\Delta$

$\Delta o(1)$ COW1

$\Delta(1)$ $\qquad$ $\Omega o(1,3)$ COW3

$\Omega o(1,2)$ $\Delta o(2)$ COW2 $\Delta o(3)$

$\Delta(3)$

$\Delta(2)$

$\Delta u(1)$ $\qquad$ $\Omega o(2,3)$

$\Delta u(2)$

$\Delta u(3)$

$$n=1 \qquad\qquad n=2 \qquad\qquad n=3 \qquad t$$

$$ZI$$

FIG 6

FIG 7

**Europäisches Patentamt**
**European Patent Office**
**Office européen des brevets**

# EUROPÄISCHER RECHERCHENBERICHT

Nummer der Anmeldung

EP 21 18 0390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2018 208210 A1 (SIEMENS AG [DE]) 28. November 2019 (2019-11-28) * das ganze Dokument * ----- | 1-15 | INV. B61L27/00 G06F1/12 H04L7/00 |
| A | DE 10 2005 005287 A1 (SIEMENS AG [DE]) 10. August 2006 (2006-08-10) * Zusammenfassung; Abbildungen 1-5 * * Absätze [0014] - [0017] * ----- | 1-15 | |

RECHERCHIERTE SACHGEBIETE (IPC)

B61L
H04L
G06F

Der vorliegende Recherchenbericht wurde für alle Patentansprüche erstellt

| Recherchenort | Abschlußdatum der Recherche | Prüfer |
|---|---|---|
| München | 2. Dezember 2021 | Robinson, Victoria |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 0390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-12-2021

| Im Recherchenbericht angeführtes Patentdokument | Datum der Veröffentlichung | Mitglied(er) der Patentfamilie | Datum der Veröffentlichung |
|---|---|---|---|
| DE 102018208210 A1 | 28-11-2019 | DE 102018208210 A1<br>EP 3804180 A1<br>WO 2019223951 A1 | 28-11-2019<br>14-04-2021<br>28-11-2019 |
| DE 102005005287 A1 | 10-08-2006 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019223951 A1

**In der Beschreibung aufgeführte Nicht-Patentliteratur**

- **FLAVIU ; CHRISTIAN.** Probabilistic clock synchronization. *Distributed Computing,* 1989, vol. 3, 146-158